# EUROPÄISCHE PATENTSCHRIFT

(11) **EP 3 684 660 B1**
(45) Veröffentlichungstag und Bekanntmachung des Hinweises auf die Patenterteilung: **21.06.2023**
(21) Anmeldenummer: 18789321.9
(22) Anmeldetag: 13.09.2018
(51) Int. Cl.: B60T 8/74

(54) **VERFAHREN UND VORRICHTUNG ZUM STEUERN EINER FESTSTELLBREMSE**
METHOD AND DEVICE FOR CONTROLLING A PARKING BRAKE
PROCÉDÉ ET DISPOSITIF DE COMMANDE D'UN FREIN DE STATIONNEMENT

(30) Priorität: 19.09.2017 DE 102017121686
(43) Veröffentlichungstag der Anmeldung: 29.07.2020
(73) Patentinhaber: KNORR-BREMSE Systeme für Nutzfahrzeuge GmbH, 80809 München (DE)
(72) Erfinder: UDVARDY, Oliver, 1118 Budapest (HU); KERNER, Peter, 2890 Tata (HU)
(86) Internationale Anmeldenummer: PCT/EP2018/074823
(87) Internationale Veröffentlichungsnummer: WO 2019/057614

(56) Entgegenhaltungen:
- WO-A1-2014/021311
- US-A1- 2003 033 073
- US-A1- 2013 175 124

## Beschreibung

Die vorliegende Erfindung bezieht sich auf ein Verfahren und eine Vorrichtung zum Steuern einer Feststellbremse.

Feststellbremsanlagen, auch elektronische Feststellbremsanlagen, verfügen für gewöhnlich über keine Antiblockier-Funktion. Wenn ein Fahrer die Feststellbremse als Hilfs- oder Notbreme bedient, kann es insbesondere auf einem reibungsarmen Untergrund dazu kommen, dass eines oder mehrere Räder blockieren. Da sich bei Nutzfahrzeugen die Feststellbremse oft auf alle Räder auswirkt, ist es möglich, dass in der beschriebenen Situation alle Räder des Fahrzeugs blockieren. In diesem Fall kann es bei einer Schätzung des Fahrzeugbewegungszustands zu Schwierigkeiten oder Ungenauigkeiten kommen. Elektronische Feststellbremsen können in der Regel vom Fahrer manuell gelöst werden, wenn das Bremspedal gedrückt wird.

Das Dokument WO 2014/021311 A1 beschreibt ein Steuergerät für eine elektrische Feststellbremse.

Vor diesem Hintergrund ist es die Aufgabe des vorliegenden Ansatzes ein verbessertes Verfahren zum Steuern einer Feststellbremse und eine verbesserte Vorrichtung zum Steuern einer Feststellbremse zu schaffen.

Diese Aufgabe wird durch ein Verfahren und eine Vorrichtung zum Steuern einer Feststellbremse gemäß den Hauptansprüchen gelöst.

Ein Verfahren zum Steuern einer Feststellbremse eines Fahrzeugs weist einen Schritt des Empfangens, einen Schritt des Einlesens und einen Schritt des Ausgebens auf. Im Schritt des Empfangens wird ein Betätigungssignal empfangen, das ein Betätigen einer Handbedieneinheit einer Feststellbremse durch einen Fahrer repräsentiert. Im Schritt des Einlesens wird ein Geschwindigkeitsabnahmesignal eingelesen, das eine Größe einer Geschwindigkeitsabnahme des Fahrzeugs nach dem Empfangen des Betätigungssignals repräsentiert. Im Schritt des Ausgebens wird abhängig von der Größe der Geschwindigkeitsabnahme ein Verzögerungssignal ausgegeben, das dazu ausgebildet ist, um ein vollständiges Greifen der Feststellbremse zu verzögern.

Durch das Verzögerungssignal kann beispielsweise ein Entleeren einer Feststellbremskammer, beispielsweise eines Feststellbremszylinders, verzögert werden.

Bei dem Fahrzeug kann es sich um eine Nutzfahrzeug, beispielsweise einen Lastkraftwagen, oder ein Fahrzeug zur Personenbeförderung, beispielsweise einen Bus oder Personenkraftwagen, handeln. Ein hier vorgestelltes Verfahren ermöglicht es, dass das vollständige Greifen der Feststellbremse verzögert wird, wenn der Fahrer des Fahrzeugs beispielsweise während eines Notbremsmanövers eine Handbedieneinrichtung der Feststellbremse betätigt. So wird dem Fahrer in einer solchen Notbremssituation die Gelegenheit gegeben, das Fahrzeug zu stabilisieren, bevor durch das vollständige Greifen der Feststellbremse möglicherweise die Räder blockieren.

Das Verfahren kann auch einen weiteren Schritt des Einlesens aufweisen, in dem ein Bewegungssignal eingelesen wird, das einen Bewegungszustand des Fahrzeugs repräsentiert, wobei der Schritt des Ausgebens ansprechend auf den Schritt des weiteren Einlesens ausgeführt werden kann. Der Bewegungszustand ist als ein bewegter Zustand des Fahrzeugs zu verstehen, bei dem eine Fortbewegungsgeschwindigkeit des Fahrzeugs größer ist als 0 km/h.

Im Schritt des Ausgebens kann das Verzögerungssignal ausgegeben werden, wenn die Größe der Geschwindigkeitsabnahme einen Grenzwert überschreitet. Durch den Grenzwert kann das Verfahren beispielsweise an unterschiedliche Fahrzeugtypen oder Beladungszustände angepasst werden. Durch den Grenzwert kann sichergestellt werden, das dem Fahrer dann die Möglichkeit gegeben wird, das Greifen der Feststellbremse aufzuheben oder zu verhindern, wenn dies beispielsweise zur Stabilisierung des Fahrzeugs sinnvoll ist. Der Grenzwert kann vorbestimmt sein und somit eine vorbestimmte Geschwindigkeitsabnahme definieren oder eine Abnahme einer Referenzgeschwindigkeit angegeben. Der Grenzwert kann zu Vergleichszwecken verwendet werden. Die Größe der Geschwindigkeitsabnahme und entsprechend der Grenzwert können beipsielsweise einen Gradienten, eine Steigung oder eine Ableitung der Geschwindigkeitsabnahme repräsentieren.

Von Vorteil ist es, wenn der Schritt des Ausgebens beendet wird, wenn ein Stillstandsignal eingelesen wird, das einen Stillstand des Fahrzeugs repräsentiert. Dabei kann das Stillstandsignal einen Stillstand oder ein Blockieren zumindest eines der Räder des Fahrzeugs anzeigen. Das Blockieren eines Rades kann auch dann auftreten, wenn das Fahrzeug noch in Bewegung ist. In diesem Fall kann das Stillstandsignal fälschlicherweise den Stillstand des Fahrzeugs anzeigen.

Von Vorteil ist es weiterhin, wenn der Schritt des Ausgebens nach einer vorbestimmten Zeitdauer beendet wird. Diese Zeitdauer ist als ein Zeitfenster für den Fahrer nutzbar, um in das vollständige Greifen der Feststellbremse einzugreifen. Bleibt der Fahrer in dieser Zeit untätig, so kann das vollständige Greifen der Feststellbremse ermöglicht werden.

Demzufolge weist das Verfahren einen Schritt des weiteren Ausgebens eines

Feststellbremsensignals auf, in dem ein Feststellbremsensignal ausgegeben wird, das dazu ausgebildet ist, um das vollständige Greifen der Feststellbremse zu bewirken, ansprechend auf das Beenden des Ausgebens.

Das Verfahren weist einen Schritt des Sendens auf, in dem ein Lösesignal gesendet wird. Das Lösesignall ist dazu ausgebildet, um die Feststellbremse zu lösen, wenn innerhalb einer vorbestimmten Zeit nach Ausgeben des Feststellbremsensignals ein weiteres Betätigungssignal empfangen wird, das ein Lösen der Handbedieneinheit durch den Fahrer repräsentiert. Somit wird es dem Fahrer auch nach dem Greifen der Feststellbremse noch ermöglicht, diese wieder zu lösen, um das Fahrzeug zu stabilisieren. Erfindungsgemäß ist es dabei nicht erforderlich, dass der Fahrer dazu gleichzeitig ein weiteres Pedal, üblicherweise das Bremspedal, betätigt.

Zusätzlich weist das Verfahren einen Schritt des weiteren Sendens auf, in dem ein Lösesignal gesendet wird. Das Lösesignal ist wiederum dazu ausgebildet, um die Feststellbremse zu lösen. Dabei kann das Lösesignal gesendet werden, wenn ein weiteres Betätigungssignal empfangen wird, das ein Lösen der Handbedieneinheit durch den Fahrer repräsentiert, während das Verzögerungssignal ausgegeben wird.

Um sicherzustellen, dass die Feststellbremse greift, beispielsweise dann, wenn der Fahrer die Handbedieneinheit nicht in einer Notbremssituation betätigt, sondern zum tatsächlichen Blockieren der Räder, kann das Verfahren einen Schritt des zusätzlichen Ausgebens aufweisen, in dem ein Feststellbremsensignal ausgegeben wird, das dazu ausgebildet ist, um das vollständige Greifen der Feststellbremse zu bewirken. Das Feststellbremsensignal kann ansprechend auf das Betätigungssignal und ein Stillstandsignal ausgegeben werden, das einen Stillstand des Fahrzeugs repräsentiert. Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form einer Vorrichtung kann die dem Ansatz zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung einer Vorrichtung zum Steuern einer Feststellbremse eines Fahrzeugs gemäß einem Ausführungsbeispiel;
Fig. 2 ein Ablaufdiagramm eines Verfahrens zum Steuern einer Feststellbremse eines Fahrzeugs gemäß einem Ausführungsbeispiel;
Fig. 3 ein Ablaufdiagramm eines Verfahrens zum Steuern einer Feststellbremse eines Fahrzeugs gemäß einem Ausführungsbeispiel; und
Fig. 4 eine Darstellung eines Verlaufs der Geschwindigkeit des Fahrzeugs.

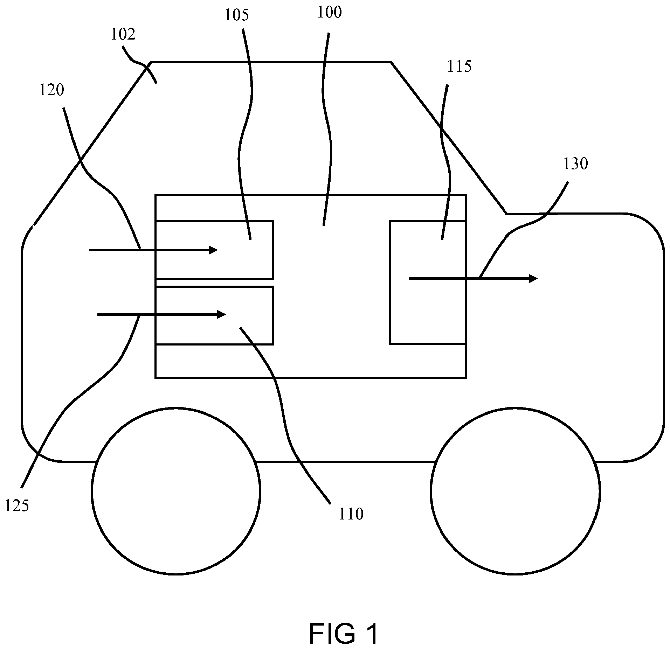

**Fig. 1** zeigt eine schematische Darstellung einer Vorrichtung 100 zum Steuern einer Feststellbremse eines Fahrzeugs 102 gemäß einem Ausführungsbeispiel.

Gemäß diesem Ausführungsbeispiel ist die Vorrichtung 100 in dem Fahrzeug 102 aufgenommen. Die Vorrichtung 100 weist eine Empfangseinrichtung 105, eine Einleseeinrichtung 110 und eine Ausgabeeinrichtung 115 auf.

Die Empfangseinrichtung 105 ist dazu ausgebildet, um ein Betätigungssignal 120 zu empfangen, das ein Betätigen einer Handbedieneinheit einer Feststellbremse durch einen Fahrer repräsentiert. Beispielhaft wird das Betätigungssignal 120 von einem mit der Handbedieneinheit gekoppelten Sensor bereitgestellt.

Die Einleseeinrichtung 110 ist dazu ausgebildet, um ein Geschwindigkeitsabnahmesignal 125 einzulesen, das eine Größe einer Geschwindigkeitsabnahme des Fahrzeugs 102 nach dem Empfangen des Betätigungssignals 120 repräsentiert. Beispielhaft wird das Geschwindigkeitsabnahmesignal 125 von einem Sensor bereitgestellt, der eine Drehzahl zumindest eines der Räder des Fahrzeugs überwacht, auf das die Feststellbremse wirkt. Auch kann das Geschwindigkeitsabnahmesignal 125 von einer Auswerteeinrichtung bereitgestellt werden, die die Geschwindigkeit des Fahrzeugs basierend auf Sensordaten überwacht.

Die Ausgabeeinrichtung 115 ist dazu ausgebildet, um abhängig von der Größe der Geschwindigkeitsabnahme ein Verzögerungssignal 130 ausgegeben, das dazu ausgebildet ist, um ein vollständiges Greifen der Feststellbremse zu verzögern. Dazu kann das Verzögerungssignal 130 beispielsweise an ein der Feststellbremse zugeordnetes Steuergerät oder einen Aktor der Feststellbremse ausgegeben werden.

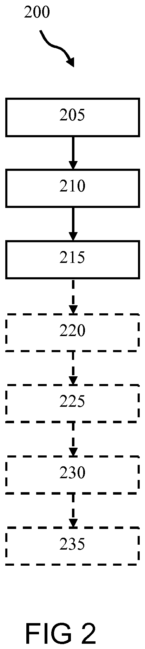

**Fig. 2** zeigt ein Ablaufdiagramm eines Verfahrens 200 zum Steuern einer Feststellbremse eines Fahrzeugs gemäß einem Ausführungsbeispiel. Dabei kann es sich um ein Verfahren 200 handeln, das von der in Fig. 1 beschriebenen Vorrichtung ausführbar und/oder ansteuerbar ist.

Das Verfahren weist zumindest einen Schritt 205 des Empfangens, einen Schritt 210 des Einlesens und einen Schritt 215 des Ausgebens auf. Im Schritt 205 des Empfangens wird ein Betätigungssignal empfangen, das ein Betätigen einer Handbedieneinheit einer Feststellbremse durch einen Fahrer repräsentiert. Im Schritt 210 des Einlesens wird ein Geschwindigkeitsabnahmesignal eingelesen, das eine Größe einer Geschwindigkeitsabnahme des Fahrzeugs nach dem Empfangen des Betätigungssignals repräsentiert. Im Schritt 215 des Ausgebens wird abhängig von der Größe der Geschwindigkeitsabnahme ein Verzögerungssignal ausgegeben, das dazu ausgebildet ist, um ein vollständiges Greifen der Feststellbremse zu verzögern. Gemäß diesem Ausführungsbeispiel wird im Schritt 215 des Ausgebens das Verzögerungssignal ausgegeben, wenn die Größe der Geschwindigkeitsabnahme, beispielsweise betragsmäßig, einen Grenzwert überschreitet.

Der Schritt 215 des Ausgebens des Verzögerungssignals wird gemäß einem Ausführungsbeispiel beendet, wenn ein Stillstandsignal eingelesen wird, das einen Stillstand des Fahrzeugs repräsentiert. Dabei kann das Stillstandsignal auch nur ein Blockieren eines Rads anzeigen, sodass es sich gemäß einem Ausführungsbeispiel bei dem von dem Stillstandsignal repräsentierten Stillstand um keinen tatsächlichen Stillstand des Fahrzeugs handelt. Zusätzlich oder alternativ wird der Schritt 215 des Ausgebens nach einer vorbestimmten Zeitdauer beendet. Auf diese Weise kann verhindert werden, dass die Wirkung der Feststellbremse zu lange verzögert wird.

Optional weist das Verfahren 200 gemäß diesem Ausführungsbeispiel zudem einen Schritt 220 des weiteren Ausgebens, einen Schritt 225 des Sendens, einen Schritt 230 des weiteren Sendens und einen Schritt 235 des zusätzlichen Ausgebens auf.

Im Schritt 220 des weiteren Ausgebens wird ein Feststellbremsensignal ausgegeben, das dazu ausgebildet ist, um das vollständige Greifen der Feststellbremse zu bewirken, wenn der Schritt 215 des Ausgebens des Verzögerungssignals beendet wird. Somit kann sichergestellt werden, dass die volle Bremswirkung der Feststellbremse nach der durchgeführten Verzögerung abgerufen wird.

Im Schritt 225 des Sendens wird ein Lösesignal gesendet, das dazu ausgebildet ist, um die Feststellbremse wider zu lösen, wenn innerhalb einer vorbestimmten Zeit nach Ausgeben des Feststellbremsensignals ein weiteres Betätigungssignal empfangen wird, das ein Lösen der Handbedieneinheit durch den Fahrer repräsentiert. Somit hat der Fahrer auch nach bereits erfolgter Verzögerung nochmals die Möglichkeit, die Feststellbremse zu lösen.

Im Schritt 230 des weiteren Sendens wird ein Lösesignal gesendet, das dazu ausgebildet ist, um die Feststellbremse zu lösen, wenn ein weiteres Betätigungssignal empfangen wird, das ein Lösen der Handbedieneinheit durch den Fahrer repräsentiert, während das Verzögerungssignal ausgegeben wird. Somit kann der Fahrzer die Feststellbremse frühzeitig wieder lösen, insbesondere während einer Zeitspanne, in der die Feststellbremse aufgrund der Verzögerung noch nicht vollständig greift.

Im Schritt 235 des zusätzlichen Ausgebens wird ein Feststellbremsensignal ausgegeben, das dazu ausgebildet ist, um das vollständige Greifen der Feststellbremse zu bewirken, ansprechend auf das Betätigungssignal und ein Stillstandsignal, das einen tatsächlichen Stillstand des Fahrzeugs repräsentiert. In diesem Fall ist keine Verzögerung der Bremswirkung der Feststellbremse erforderlich, da sich das Fahrzeug beispielsweise in einer Parkposition befindet.

Die hier vorgestellten Verfahrensschritte können wiederholt sowie in einer anderen als in der beschriebenen Reihenfolge ausgeführt werden.

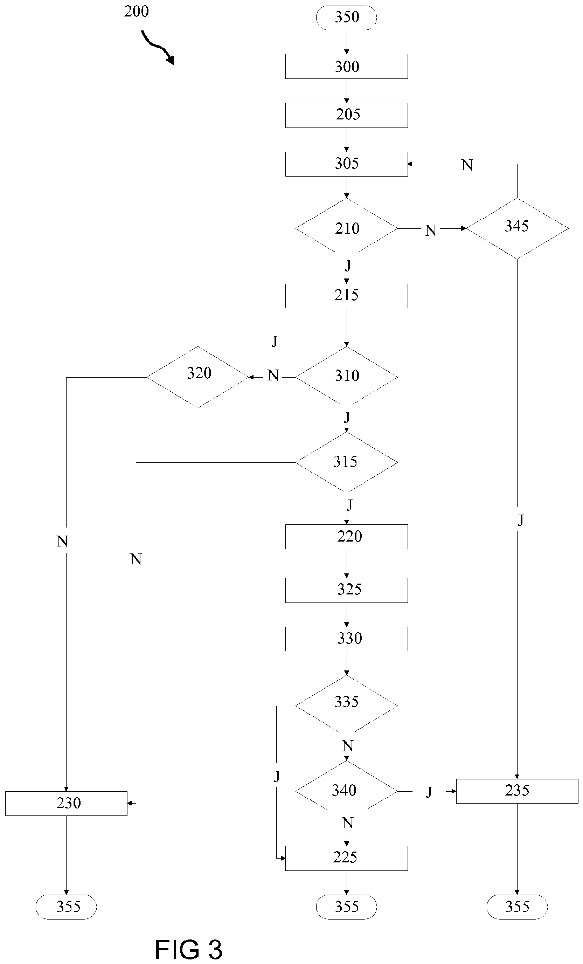

**Fig. 3** zeigt ein Ablaufdiagramm eines Verfahrens 200 zum Steuern einer Feststellbremse eines Fahrzeugs gemäß einem Ausführungsbeispiel. Dabei kann es sich um ein Ausführungsbeispiel des in Fig. 2 beschriebene Verfahrens 200 mit optionalen zusätzlichen Schritten handeln.

In einem Schritt 300 des weiteren Einlesens wird ein Bewegungssignal eingelesen, das einen Bewegungszustand des Fahrzeugs repräsentiert. Hierbei wird im Schritt 300 des weiteren Einlesens eine Referenzgeschwindigkeit des Fahrzeugs eingelesen, die anzeigt, dass das Fahrzeug in Bewegung ist und nicht stillsteht. In einem Schritt 305 des Einleitens wird ein Entleeren zumindest einer Feststellbremskammer eingeleitet. In einem Schritt 310 des Abfragens wird ein Bewegungszustand des Fahrzeugs abgefragt. Wenn im Schritt 310 des Abfragens ein Stillstandssignal erkannt wird, das einen Stillstand des Fahrzeugs repräsentiert, folgt ein Schritt 315 des Prüfens, in dem geprüft wird, ob das Betätigungssignal noch anliegt, d. h., ob die Handbedieneinheit noch betätigt ist, also in einer Betätigungsposition angeordnet ist. Wenn im Schritt 310 des Abfragens ein Bewegungssignal erkannt wird, das anzeigt, das das Fahrzeug in Bewegung ist, folgt ein Schritt 320 des weiteren Prüfens, in dem geprüft wird, ob das Betätigungssignal noch anliegt, d. h., ob die Handbedieneinheit noch betätigt ist, also in einer Betätigungsposition angeordnet ist. Wenn das Betätigungssignal noch anliegt, folgt der Schritt 310 des Abfragens. Wenn das Betätigungssignal nicht mehr anliegt oder das weitere Betätigungssignal eingelesen wird, das das Lösen der Handbedieneinheit durch den Fahrer repräsentiert, wird der Schritt 230 des weiteren Sendens ausgeführt und die Feststellbremse wird gelöst.

Wenn im Schritt 315 des Prüfens erkannt wird, dass das Betätigungssignal noch anliegt, wird der Schritt 220 des weiteren Ausgebens ausgeführt und ein vollständiges Greifen der Feststellbremse bewirkt. Wenn im Schritt 315 des Prüfens erkannt wird, dass das Betätigungssignal nicht mehr anliegt, wird der Schritt 230 des weiteren Sendens ausgeführt und die Feststellbremse wird gelöst.

In einem Schritt 325 des Startens wird für eine vorbestimmte Timer-Laufzeit ein Timer gestartet. In einem Schritt 330 des Erkennens wird ein weiteres Betätigungssignal erkannt, das ein Lösen der Handbedieneinheit durch den Fahrer repräsentiert. In einem Schritt 335 des Überprüfens wird überprüft, ob ein Bremspedal durch den Fahrer betätigt wird. Wenn das Bremspedal betätigt ist, folgt Schritt 225 des Ausgebens und die Feststellbremse wird gelöst. Wenn das Bremspedal nicht betätigt ist, erfolgt ein Schritt 340 des weiteren Abfragens der vorbestimmten Timer-Laufzeit. Wenn die Timer-Laufzeit abgelaufen ist, folgt der Schritt 235 des zusätzlichen Ausgebens und es wird ein vollständiges Greifen der Feststellbremse bewirkt. Wenn die Timer-Laufzeit noch nicht abgelaufen ist, folgt Schritt 225 des Ausgebens und die Feststellbremse wird gelöst.

Wenn im Schritt 210 ein Geschwindigkeitsabnahmesignal eingelesen wird, das eine Größe einer Geschwindigkeitsabnahme des Fahrzeugs nach dem Empfangen des Betätigungssignals repräsentiert, bei dem die Größe den in Fig. 2 beschriebenen Grenzwert unterschreitet, wird ein Schritt 345 des zusätzlichen Abfragens durchgeführt, in dem ein Bewegungszustand des Fahrzeugs abgefragt wird. Wenn im Schritt 345 des zusätzlichen Abfragens ein Stillstandssignal erkannt wird, das einen Stillstand des Fahrzeugs repräsentiert, folgt der Schritt 235 des zusätzlichen Ausgebens und das vollständige Greifen der Feststellbremse wird bewirkt. Wenn im Schritt 345 des zusätzlichen Abfragens ein Bewegungssignal erkannt wird, das anzeigt, das das Fahrzeug in Bewegung ist, folgt der Schritt 305 des Einleitens.

Ein Block 350 kennzeichnet einen Start des Verfahrens 200. Weitere Blöcke 355 kennzeichnen jeweils ein Ende des Verfahrens 200.

Im Folgenden werden Ausführungsbeispiele des Verfahrens 200 noch einmal zusammengefasst mit anderen Worten beschrieben:
Das hier vorgestellte Verfahren 200 kann auch als ein Verfahren zum Lösen einer elektronischen Feststellbremse im Falle einer Radblockierung bezeichnet werden.

Anders ausgedrückt kann das Verfahren 200 als ein Verfahren zum Verzögern einer Feststellbremse und zum Ermöglichen eines Lösens der Feststellbremse unter alleiniger Verwendung einer Handbedieneinheit in sicherheitskritischen Situationen bezeichnet werden. Bei der sicherheitskritischen Situation handelt es sich gemäß diesem Ausführungsbeispiel um eine Situation, in der die Räder des Fahrzeugs blockiert sind. Das vollständige Greifen der Feststellbremse wird hierbei verzögert, wenn eine sicherheitskritische Situation durch eine besonders hohe oder intensive Geschwindigkeitsabnahme des Fahrzeugs erkannt wird. Nachdem die sicherheitskritische Situation erkannt wurde, wird das vollständige Greifen der Feststellbremse gemäß diesem Ausführungsbeispiel nur für eine vorbestimmte Zeitdauer verzögert. Das Lösen der Feststellbremse ist nur dann ermöglicht, wenn die hohe oder intensive Geschwindigkeitsabnahme erkannt wurde, bevor die Feststellbremse vollständig greift. Das Lösen der Feststellbremse ist außerdem nur innerhalb eines definierten Zeitfensters nach einem vollständigen Greifen der Feststellbremse möglich.

In einer bekannten Hilfs- oder Notbremssituation, wenn alle Räder blockiert sind und der Fahrer die Handbedieneinheit der Feststellbremse vollständig betätigt hat, ist es möglich, dass die Feststellbremse vollständig greift, da alle Räder keinerlei Fahrzeuggeschwindigkeit anzeigen. Es ist nun möglich, dass der Fahrer in einer solchen bekannten Situation erfolglos versucht, die Feststellbremse zu lösen und das Fahrzeug zu stabilisieren, indem er zwar die Handbedieneinheit der Feststellbremsanlage bedient, ohne dabei jedoch das Bremspedal zu drücken.

Bei vollständig betätigter Handbedieneinheit und einem festgestellten Bewegungszustand des Fahrzeugs, der einen Stillstand anzeigt, müssen die Feststellbremsen greifen. Bei dem hier vorgestellten Verfahren 200 wird nun aber vorteilhafterweise, wenn ein Bewegungszustand festgestellt wurde, der einen Stillstand des Fahrzeugs anzeigt, eine erkannte Geschwindigkeitsabnahme des Fahrzeugs vor dem festgestellten Stillstand jedoch einen Grenzwert überschreitet, das vollständige Greifen der Feststellbremse für eine vorbestimmte Zeitdauer verzögert, um es dem Fahrer zu ermöglich, das Fahrzeug durch ein Lösen der Handbedieneinheit zu stabilisieren.

Wenn die Geschwindigkeitsabnahme größer ist, als der Grenzwert und der Fahrer die Handbedieneinheit der Feststellbremse länger als die vorbestimmte Zeitdauer betätigt, wird es dem Fahrer außerdem ermöglicht, in einem definierten Zeitfenster die Feststellbremse manuell zu lösen, ohne dabei das Bremspedal oder ein anderes Pedal drücken zu müssen, nachdem die Feststellbremse vollständig aktiviert wurde, sodass es dem Fahrer ermöglicht ist, die Feststellbremse zu lösen und die Stabilität des Fahrzeugs zurückzugewinnen.

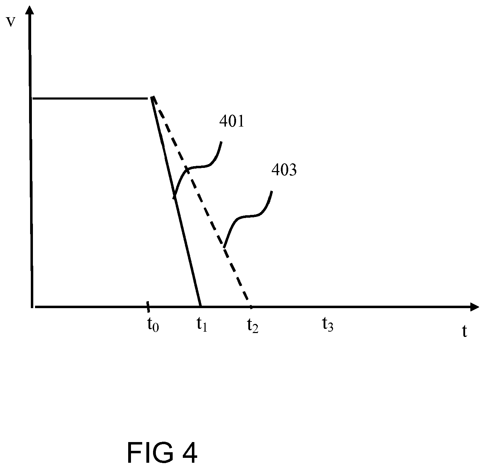

Fig. 4 zeigt ein Diagram, auf dessen Abzisse die Zeit t und auf dessen Ordinate die Geschwindigkeit des Fahrzeugs aufgetragen ist. Es ist eine Geschwindigkeitsabnahme 401 des Fahrzeugs nach dem Beginn eines Bremsvorgangs zum Zeitpunkt t₀ gezeigt. Der Beginn des Bremsvorgangs wird beispielsweise durch das bereits beschriebene Betätigungssignal angezeigt. Die Geschwindigkeitsabnahme 401 wird beispielsweise durch das bereits beschriebene Geschwindigkeitsabnahmesignal angezeigt. Gemäß diesem Ausführungsbeispiel ist die Geschwindigkeitsabnahme 401 größer als eine vorbestimmte Geschwindigkeitsabnahme 403, die beispielsweise über den bereits beschriebenen Grenzwert für die Geschwindigkeitsabnahme 401 definiert wird. Dieser Grenzwert entspricht beispielsweise dem Gradienten oder der Steigung der Geschwindigkeitsabnahme 403. Die Größe der Geschwindigkeitsabnahme 401, beispielsweise der Gradient der Geschwindigkeitsabnahme 401, überschreitet somit den Grenzwert. Für diesen Fall wird gemäß einem Ausführungsbeisiel das bereits beschriebene Verzögerungssignals ausgegeben, durch das ein vollständiges Greifen der Feststellbremse verzögert werden kann. Somit ist es dem Fahrer möglich, die Feststellbremse nach dem Zeitpunkt t1 zu lösen.

Gemäß einem Ausführungsbeispiel bezieht sich die Geschwindigkeitsabnahme 401 auf eine Referenzgeschwindigkeit, wie sie anhand der vorangegangenen Figuren in den Schritten 300, 210, 215, 310 genannt ist. Diese Referenzgeschwindigkeit wird unter Verwendung aller verfügbare Radgeschwindigkeitssignalen mit einem geeigneten Algorithmus berechnet. Die Referenzgeschwindigkeit ist nicht notwendigerweise gleich irgendeiner der gemessenen Radgeschwindigkeiten.

Gemäß einem Ausführungsbeispiel schätzt eine Steuereinheit der Feststellbremse die Geschwindigkeitsabnahme 401 des Fahrzeugs unter Verwendung des Gradienten der Referenzgeschwindigkeit. Wenn der Gradient größer als eine vorbestimmte Grenze ist, wie sie anhand der vorangegangenen Figuren im Schritt 215 verwendet wird, so wird angenommen, dass die Geschwindigkeitsabnahme des Fahrzeugs gleich dem vorbestimmten Grenzwert ist, anstelle der gemessenen Geschwindigkeitsabnahme 401.

Gemäß dem anhand von Fig. 4 gezeigten Ausführungsbeispiel erreicht die Referenzgeschwindigkeit Null zum Zeitpunkt t₁. Mit dem hier beschriebenen Ansatz wird angenommen, dass die Fahrzeuggeschwindigkeit zum Zeitpunkt t2 Null wird. Wenn der Fahrer die Handsteuereinheit (HCU) der Feststellbremse zwischen den Zeitpunkten t1 und t2 freigibt, wird die Feststellbremse freigegeben.

Wenn der Fahrer die Handsteuereinheit freigibt, beispielsweise durch Entfernen seiner Hand von der Handsteuereinheit, zwischen den Zeitpunkten t1 und t2, so wird die Feststellbremse gemäß einem Ausführungsbeispiel gelöst oder deaktiviert.

Wenn der Fahrer die Handsteuereinheit bis zum Zeitpunkt t2 in der Parkposition hält, wird die Feststellbremse gemäß einem Ausführungsbeispiel vollständig festgestellt oder aktiviert.

Ferner ist es gemäß einem Ausführungsbeispiel für den Fall, dass der Fahrer die Handsteuereinheit zwischen den Zeitpunkten t2 und t3 in eine Position zum Lösen der Feststellbremse überführt, nicht erforderlich, dass ein Bremspedal oder irgendeinanderes Pedal gedrückt wird, um die Feststellbremse zu lösen oder zu deaktiveren.

Nach dem Zeitpunkt t3 ist ein Lösen oder Deaktivieren der Feststellbremse möglich, wenn der Fahrer die Handsteuereinheit in die Position zum Lösen der Feststellbremse überführt und zusätzlich das Bremspedal oder ein anderes dafür vorgesehenes Pedal drückt.

### BEZUGSZEICHENLISTE

- 100: Vorrichtung zum Steuern einer Feststellbremse
- 102: Fahrzeug
- 105: Empfangseinrichtung
- 110: Einleseeinrichtung
- 115: Ausgabeeinrichtung
- 120: Betätigungssignal
- 125: Geschwindigkeitsabnahmesignal
- 130: Verzögerungssignal
- 200: Verfahren zum Steuern einer Feststellbremse
- 205: Schritt des Empfangens
- 210: Schritt des Einlesens
- 215: Schritt des Ausgebens
- 220: Schritt des weiteren Ausgebens
- 225: Schritt des Sendens
- 230: Schritt des weiteren Sendens
- 235: Schritt des zusätzlichen Ausgebens
- 300: Schritt des weiteren Einlesens
- 305: Schritt des Einleitens
- 310: Schritt des Abfragens
- 315: Schritt des Prüfens
- 320: Schritt des weiteren Prüfens
- 325: Schritt des Startens
- 330: Schritt des Erkennens
- 335: Schritt des Überprüfens
- 340: Schritt des weiteren Abfragens
- 345: Schritt des zusätzlichen Abfragens
- 350: Block
- 355: weiterer Block
- 401: Geschwindigkeitsabnahme
- 403: vorbestimmte Geschwindigkeitsabnahme

## Patentansprüche

1. Verfahren (200) zum Steuern einer Feststellbremse eines Fahrzeugs (102), wobei das Verfahren (200) die folgenden Schritte umfasst:
Empfangen (205) eines Betätigungssignals (120), das ein Betätigen einer Handbedieneinheit einer Feststellbremse durch einen Fahrer repräsentiert;
Einlesen (210) eines Geschwindigkeitsabnahmesignals (125), das eine Größe einer Geschwindigkeitsabnahme (401) des Fahrzeugs (102) nach dem Empfangen (205) des Betätigungssignals (120) repräsentiert;
Ausgeben (215) eines Verzögerungssignals (130) abhängig von der Größe der Geschwindigkeitsabnahme (401), wobei das Verzögerungssignal (130) dazu ausgebildet ist, um ein vollständiges Greifen der Feststellbremse zu verzögern, wobei der Schritt (215) des Ausgebens nach einer vorbestimmten Zeitdauer beendet wird, oder beendet wird, wenn ein Stillstandsignal eingelesen wird, das einen Stillstand des Fahrzeugs (102) repräsentiert;
weiteres Ausgeben (220) eines Feststellbremsensignals, das dazu ausgebildet ist, um das vollständige Greifen der Feststellbremse zu bewirken, ansprechend auf das Beenden des Ausgebens;
**gekennzeichnet durch**
einen Schritt (225) des Sendens eines Lösesignals, das dazu ausgebildet ist, um die Feststellbremse zu lösen, wenn innerhalb einer vorbestimmten Zeit nach Ausgeben des Feststellbremsensignals ein weiteres Betätigungssignal empfangen wird, das ein Lösen der Handbedieneinheit durch den Fahrer repräsentiert.

2. Verfahren (200) gemäß Anspruch 1, bei dem im Schritt (215) des Ausgebens das Verzögerungssignal (130) ausgegeben wird, wenn die Größe der Geschwindigkeitsabnahme (401) einen Grenzwert überschreitet.

3. Verfahren (200) gemäß einem der vorangegangenen Ansprüche, mit einem Schritt (230) des weiteren Sendens eines Lösesignals, das dazu ausgebildet ist, um die Feststellbremse zu lösen, wenn ein weiteres Betätigungssignal empfangen wird, das ein Lösen der Handbedieneinheit durch den Fahrer repräsentiert, während das Verzögerungssignal (130) ausgegeben wird.

4. Verfahren (200) gemäß einem der vorangegangenen Ansprüche, mit einem Schritt (235) des zusätzlichen Ausgebens eines Feststellbremsensignals, das dazu ausgebildet ist, um das vollständige Greifen der Feststellbremse zu bewirken, ansprechend auf das Betätigungssignal (120) und ein Stillstandsignal, das einen Stillstand des Fahrzeugs (102) repräsentiert.

5. Vorrichtung (100), die eingerichtet ist, um Schritte des Verfahrens (200) gemäß einem der vorangegangenen Ansprüche in entsprechenden Einheiten (105, 110, 115) auszuführen und/oder anzusteuern.

6. Computerprogramm, das dazu eingerichtet ist, das Verfahren (200) gemäß einem der Ansprüche 1 bis 4 auszuführen und/oder anzusteuern.

7. Maschinenlesbares Speichermedium, auf dem das Computerprogramm nach Anspruch 6 gespeichert ist.

## Claims

1. Method (200) for controlling a parking brake of a vehicle (102), wherein the method (200) comprises the following steps:
receiving (205) an activation signal (120) which represents a manual operating unit of a parking brake being activated by a driver;
reading (210) a speed decrease signal (125) which represents a value of a speed decrease (401) of the vehicle (102) upon receiving (205) the activation signal (120);
emitting (215) a delay signal (130) as a function of the value of the speed decrease (401), wherein the delay signal (130) is configured for delaying a complete engagement of the parking brake, wherein the step (215) of emitting is terminated after a predetermined temporal period, or is terminated when a standstill signal which represents a standstill of the vehicle (102) is read;
further emitting (220) a parking brake signal which is configured for causing the complete engagement of the parking brake in response to the termination of the emitting;
**characterized by**
a step (225) of transmitting a release signal which is configured for releasing the parking brake when a further activation signal which represents the manual operating unit being released by the driver is received within a predetermined time upon emitting the parking brake signal.

2. Method (200) according to Claim 1, wherein in the step (215) of emitting the delay signal (130) is emitted when the value of the speed decrease (401) exceeds a limit value.

3. Method (200) according to either of the preceding claims, comprising a step (230) of further transmitting a release signal which is configured for releasing the parking brake when a further activation signal which represents the manual operating unit being released by the driver while the delay signal (130) is being emitted is received.

4. Method (200) according to one of the preceding claims, comprising a step (235) of additionally emitting a parking brake signal which is configured for causing the complete engagement of the parking brake in response to the activation signal (120) and a standstill signal which represents a standstill of the vehicle (102).

5. Device (100) which is specified for carrying out and/or actuating steps of the method (200) according to one of the preceding claims in corresponding units (105, 110, 115).

6. Computer software program which is specified for carrying out and/or actuating the method (200) according to one of Claims 1 to 4.

7. Machine-readable storage medium on which the computer software program according to Claim 6 is stored.

## Revendications

1. Procédé (200) de commande d'un frein de stationnement d'un véhicule (102), dans lequel le procédé (200) comprend les stades suivants :
réception (205) d'un signal (120) d'actionnement, qui représente un actionnement d'une unité de manoeuvre à la main d'un frein de stationnement par un conducteur ;
lecture (210) d'un signal (125) de diminution de la vitesse, qui représente une valeur d'une diminution (401) de la vitesse du véhicule (102), après la réception (205) du signal (120) d'actionnement ;
émission(215) d'un signal (130) de décélération en fonction de la valeur de la diminution (401) de la vitesse, dans lequel le signal (130) de décélération est constitué pour retarder une prise complète du frein de stationnement, dans lequel on met fin au stade (215) de l'émission après une durée déterminée à l'avance ou on y met fin, si on lit un signal d'arrêt, qui représente un arrêt du véhicule (102) ;
autre émission (220) d'un signal de frein de stationnement, qui est constitué pour provoquer la prise complète du frein de stationnement en réaction à la fin de l'émission ;
**caractérisé par**
un stade (225) d'envoi d'un signal de desserrage, qui est constitué pour desserrer le frein de stationnement si, dans un temps déterminé à l'avance après l'émission du signal de frein de stationnement, on a reçu un autre signal d'actionnement, qui représente un desserrage de l'unité de manoeuvre à la main par le conducteur.

2. Procédé (200) suivant la revendication 1, dans lequel, dans le stade (215) de l'émission, on émet le signal (130) de décélération, si la valeur de la diminution (401) de la vitesse dépasse une valeur limite.

3. Procédé (200) suivant l'une des revendications précédentes, comprenant un stade (230) d'un autre envoi d'un signal de desserrage, qui est constitué pour desserrer le frein de stationnement, si on reçoit un autre signal d'actionnement, qui représente un desserrage de l'unité de manoeuvre à la main par le conducteur, pendant que le signal (130) de décélération est émis.

4. Procédé (200) suivant l'une des revendications précédentes, comprenant un stade (235) de l'émission supplémentaire d'un signal de frein de stationnement, qui est constitué pour provoquer la prise complète du frein de stationnement en réaction au signal (120) d'actionnement et à un signal d'arrêt, qui représente un arrêt du véhicule (102).

5. Dispositif (100), qui est agencé pour effectuer et/ou commander des stades du procédé (200) suivant l'une des revendications précédentes, dans des unités (105, 110, 115) correspondantes.

6. Programme d'ordinateur, qui est agencé pour exécuter et/ou commander le procédé (200) suivant l'une des revendications 1 à 4.

7. Support de mémoire, déchiffrable par machine, sur lequel le programme d'ordinateur de la revendication 6 est mis en mémoire.
